(19) Europäisches Patentamt
European Patent Office
Office européen des brevets

(11) **EP 2 743 186 B1**

(12) **FASCICULE DE BREVET EUROPEEN**

| | |
|---|---|
| (45) Date de publication et mention de la délivrance du brevet: **28.02.2018 Bulletin 2018/09** | (51) Int Cl.: **B64C 27/00** (2006.01) **B64D 45/04** (2006.01) **G01S 13/88** (2006.01) **G01S 13/94** (2006.01) |

(21) Numéro de dépôt: **13196582.4**

(22) Date de dépôt: **11.12.2013**

(54) **Procédé de sécurisation d'un aéronef**

Verfahren zur Sicherung eines Luftfahrzeugs

Method for securing an aircraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2012 FR 1203384**

(43) Date de publication de la demande:
**18.06.2014 Bulletin 2014/25**

(73) Titulaire: **Thales**
**92200 Neuilly Sur Seine (FR)**

(72) Inventeur: **Lys, Sébastien**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
**WO-A2-01/90694       US-A- 5 638 282**
**US-A1- 2002 099 478     US-B1- 8 234 020**

**Description**

La présente invention concerne un procédé de sécurisation d'un aéronef. L'invention se rapporte également à un dispositif de sécurisation d'un aéronef et à un aéronef comprenant le dispositif de sécurisation.

Dans le domaine aéronautique, il est souhaitable d'éviter toute collision d'un aéronef avec le sol survolé par celui-ci.

Pour cela, il est connu un système embarqué désigné par l'acronyme GPWS. L'acronyme GPWS se rapporte à l'expression anglaise Ground Proximity Warning System (Système avertisseur de proximité du sol). Le système GPWS est un système destiné à éviter que l'aéronef s'écrase au sol. Pour cela, le système GPWS utilise une information relative à la hauteur de l'aéronef par rapport au sol survolé par l'aéronef.

De ce fait, le système GPWS n'est capable de positionner l'aéronef qu'à la verticale du sol.

Le document WO 01/90694 décrit un exemple de système GPWS.

Il est également connu un système appelé Enhanced-GPWS ou E-GPWS qui repose sur la combinaison de l'utilisation de trois sources d'information : une information sur la hauteur de l'aéronef par rapport au sol survolé, une information relative à la localisation de l'aéronef dans l'espace et des informations fournies par une carte du sol survolé. L'information relative à la localisation est fourni par une centrale de navigation ou un système de localisation, tel un système GPS (acronyme anglais de « Global Positioning System » qui est système de positionnement par satellites opérationnel et accessible au grand public) ou Galileo (système européen de positionnement par satellites).

Le système E-GPWS comprend un contrôleur capable, à partir des trois sources d'informations précitées, de déterminer si l'aéronef est dans une situation dangereuse par rapport au sol.

Mais, la carte du sol survolé ne reconstitue pas le sol survolé avec une précision suffisante. Notamment, le sursol n'est pas pris en compte, ce qui signifie que la présence éventuelle d'obstacle fixe ou variable sur le sol n'est pas prise en compte.

De ce fait, dans certaines situations de danger de collision, le système E-GPWS ne détecte pas le risque de collisions.

De plus, pour certaines applications, notamment dans le domaine militaire, le terrain n'est pas connu au préalable (mission de reconnaissance) et en outre, il est inenvisageable d'utiliser un système de localisation de type GPS ou Galileo du fait du risque de brouillage par un aéronef ennemi.

Dans ces applications, le système E-GPWS est inopérant.

Il existe donc un besoin pour un procédé de sécurisation d'un aéronef qui permette une meilleure détection des situations de danger de collision avec le sol, et ce dans toutes les circonstances.

Selon l'invention, ce but est atteint par un procédé de sécurisation d'un aéronef survolant un sol comme définit dans la revendication 1.
L'invention concerne aussi un dispositif de sécurisation d'un aéronef survolant un sol selon la revendication 4. Suivant des modes de réalisation particuliers, le dispositif de sécurisation comprend une ou plusieurs des caractéristiques suivantes : - le radioaltimètre comprend un système d'antenne d'émission-réception apte à émettre une onde radioélectrique générée par un générateur d'ondes radioélectrique et à recevoir l'onde radioélectrique réfléchie par le sol et une unité de traitement, les moyens de calcul, de comparaison et de détection faisant partie de l'unité de traitement.

**[0014]** - le radioaltimètre comprend une unité d'avertissement d'un risque de collision de l'aéronef avec le sol.

En outre, l'invention se rapporte aussi à un aéronef comprenant un dispositif de sécurisation tel que précédemment décrit.

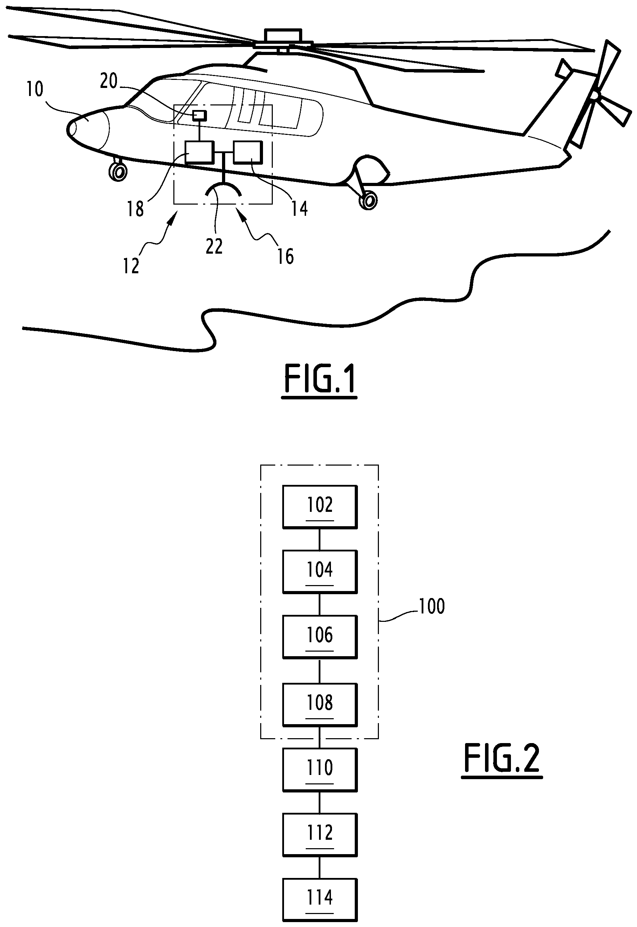

D'autres caractéristiques et avantages de l'invention apparaîtront à la lecture de la description qui suit de modes de réalisation de l'invention, donnée à titre d'exemple uniquement et en référence aux dessins qui sont :- figure 1, un schéma d'un aéronef selon l'invention, et- figure 2, une vue d'un ordinogramme d'un exemple de mise en oeuvre du procédé de sécurisation d'un aéronef selon l'invention.

L'aéronef 10 représenté à la figure 1 survole un sol.

L'aéronef 10 est un hélicoptère.

En variante, l'aéronef 10 est un avion à usage militaire, un avion à usage militaire ayant la certification civile (capacité à transporter des passagers), un drone, ou tout autre type d'engin volant.

L'aéronef 10 comporte un dispositif de sécurisation 12.

Selon l'exemple de la figure 1, le dispositif de sécurisation est un radioaltimètre 12 aussi appelé radar altimétrique.

Le radioaltimètre 12 comprend un générateur 14 d'ondes radioélectrique, un système 16 d'antenne d'émission-réception, une unité 18 de traitement et une unité 20 d'avertissement d'un risque de collision.

Le système 16 d'antenne d'émission-réception comprend une antenne 22 d'émission-réception. L'antenne 22 est propre à émettre une onde radioélectrique émise par le générateur 14 d'ondes radioélectrique. L'onde ainsi émise est réfléchie par le sol vers l'antenne 22. L'antenne 22 est également propre à recevoir l'onde radiofréquence réfléchie par le sol.

Selon une variante, le système 16 d'antenne d'émission-réception comprend une pluralité d'antennes 22 d'émission-réception.

Selon une autre variante, le système 16 d'antenne d'émission-réception comporte une partie émission et une partie réception distincte. Par exemple, le système 16 d'antenne comprend deux antennes, une antenne dédiée à l'émission et une antenne dédiée à la réception.

L'unité de traitement 18 est propre à enregistrer le temps écoulé entre l'émission de l'onde radiofréquence par l'antenne 22 et la réception de l'onde radiofréquence par la même antenne 22.

L'unité de traitement 18 est propre à déterminer la hauteur de l'aéronef 10 par rapport au sol à partir du temps écoulé enregistré.

L'unité de traitement 18 est également propre à mettre en oeuvre un procédé de sécurisation de l'aéronef 10.

L'unité 20 d'avertissement d'un risque de collision est propre à générer un avertissement au pilote de l'aéronef 10.

A titre d'exemple, l'unité 20 d'avertissement est une diode laser propre à être allumée pour signifier qu'il existe un risque de collision.

Selon une variante, l'unité 20 d'avertissement comprend un haut-parleur propre à générer un avertissement sonore au pilote de l'aéronef 10.

Le fonctionnement du radioaltimètre 12 de l'aéronef 10 est maintenant décrit en référence à la figure 2.

Le procédé de sécurisation comporte une étape 100 de mesure de la vitesse de rapprochement $v_{rapprochement}$ du sol de l'aéronef 10 par le radioaltimètre 12.

La vitesse de rapprochement $v_{rapprochement}$ du sol de l'aéronef 10 est la dérivée temporelle de la hauteur de l'aéronef 10 par rapport au sol.

La vitesse de rapprochement $v_{rapprochement}$ du sol de l'aéronef 10 dépend de la composante verticale de la vitesse de déplacement de l'aéronef 10 et de la variation d'altitude du sol.

A titre d'exemple, supposons que la composante verticale de la vitesse de déplacement de l'aéronef 10 est nulle et que le sol comprend un immeuble et une cour intérieure, la cour intérieure étant à une altitude inférieure à celle de l'immeuble. Lorsque l'aéronef 10 survole successivement l'immeuble puis la cour intérieure, la hauteur de l'aéronef 10 par rapport au sol varie. Il en résulte que la vitesse de rapprochement $v_{rapprochement}$ du sol de l'aéronef 10 est non nulle.

Dans le cas de la mise en oeuvre illustrée par l'ordinogramme de la figure 2, l'étape 100 de mesure de la vitesse de rapprochement $v_{rapprochement}$ du sol de l'aéronef 10 comporte une étape 102 d'acquisition d'une première hauteur H1 de l'aéronef 10 par rapport au sol. La première hauteur H1 est obtenue par utilisation du système 16 d'antenne d'émission-réception et de l'unité de traitement 18.

L'étape 100 de mesure de la vitesse de rapprochement du sol $v_{rapprochement}$ de l'aéronef 10 comporte aussi une étape 104 d'acquisition d'une deuxième hauteur H2 de l'aéronef 10 par rapport au sol. La deuxième hauteur H2 est également obtenue par utilisation du système 16 d'antenne d'émission-réception et de l'unité de traitement 18.

L'étape 100 de mesure de la vitesse de rapprochement $v_{rapprochement}$ du sol de l'aéronef 10 comporte aussi une étape 106 d'enregistrement de l'intervalle de temps $\Delta T$ écoulé entre l'instant auquel l'étape 102 d'acquisition de la première hauteur H1 est mise en oeuvre et l'instant auquel l'étape 104 d'acquisition de la deuxième hauteur H2 est mise en oeuvre.

L'étape 106 d'enregistrement de l'intervalle de temps $\Delta T$ est mise en oeuvre par l'unité de traitement 18.

L'étape 100 de mesure de la vitesse de rapprochement $v_{rapprochement}$ du sol de l'aéronef 10 comporte aussi une étape 108 de calcul de la vitesse de rapprochement $v_{rapprochement}$.

L'étape 108 de calcul est mise en oeuvre par l'unité de traitement 18.

A titre d'exemple, la vitesse de rapprochement $v_{rapprochement}$ est obtenue en calculant la différence entre la deuxième hauteur H2 et la première hauteur H1 puis en divisant le résultat de la différence par l'intervalle de temps $\Delta T$. Ceci se traduit mathématiquement par la relation suivante :

$$v_{rapprochement} = \frac{H2 - H1}{\Delta T}$$

A l'issue de l'étape 100 de mesure de la vitesse de rapprochement, la vitesse de rapprochement $v_{rapprochement}$ du sol de l'aéronef 10 est ainsi obtenue.

Le procédé de sécurisation comporte une étape 110 de comparaison de la vitesse de rapprochement $v_{rapprochement}$ avec une valeur de vitesse seuil $v_{seuil}$.

Selon l'exemple de la figure 1, l'étape 110 de comparaison est mise en oeuvre par l'unité de traitement 18.

Dans le cas du procédé de la figure 2, la valeur de vitesse seuil $v_{seuil}$ est une valeur prédéfinie.

Par exemple, la valeur de vitesse seuil $v_{seuil}$ est choisie égale à 40 m.s$^{-1}$.

Selon un autre mode de réalisation, la valeur de vitesse seuil $v_{seuil}$ est fonction du profil de la mission effectuée par l'aéronef 10.

Il est entendu par l'expression « profil de mission » la priorité donnée à des impératifs militaires liés à la nature de la mission de l'aéronef 10 impliquant la tolérance d'un risque accru de collision avec le sol. A titre d'exemple, pour une mission de pénétration, l'accent est mis sur la discrétion. De ce fait, il est impératif que l'aéronef 10 ne soit pas détecté un survol à très très basse altitude et donc, même si cela implique un risque accru de collision de l'aéronef 10 avec le sol.

En variante, la valeur de vitesse seuil $v_{seuil}$ est fonction de la deuxième hauteur H2 acquise à l'étape 104 d'acquisition.

$H_{seuil}$. Par exemple, la deuxième hauteur H2 est comparée à une valeur seuil de hauteur

Lorsque la deuxième hauteur H2 est supérieure à la valeur seuil de hauteur $H_{seuil}$, la valeur de vitesse seuil $v_{seuil}$ de vitesse est fixée à une première valeur de vitesse seuil v1. Lorsque la deuxième hauteur H2 est inférieure ou égale à la valeur seuil de hauteur $H_{seuil}$, la valeur de vitesse seuil $v_{seuil}$ de vitesse est fixée à une deuxième valeur de vitesse seuil v2. Ceci se traduit mathématiquement ainsi :

$$\begin{cases} \text{si } H2 \succ H_{seuil},\ v_{seuil} = v1 \\ \text{si } H2 \leq H_{seuil},\ v_{seuil} = v2 \end{cases}$$

La première valeur seuil v1 est supérieure à la deuxième valeur seuil v2. Cela correspond au fait que lorsque la deuxième hauteur H2 est plus grande, une plus grande vitesse de rapprochement $v_{rapprochement}$ est permise sans augmenter le risque de collision de l'aéronef 10 avec le sol.

Selon l'invention, l'exemple présenté pour deux hauteurs est étendu au cas où la hauteur H2 est comparée à plusieurs valeurs seuils de hauteur, chaque valeur seuil de hauteur étant associée à une valeur de vitesse seuil différente.

Selon la variante donnée à titre d'exemple, plus la valeur seuil de hauteur est grande, plus la valeur seuil de vitesse est faible.

L'association entre les valeurs seuils de hauteur et les valeurs seuils de vitesse est, par exemple, mémorisée dans une table de correspondance à laquelle l'unité de traitement 18 est associée.

Lorsque la vitesse de rapprochement $v_{rapprochement}$ du sol de l'aéronef 10 est supérieure à la vitesse seuil $v_{seuil}$, le procédé comporte une étape 112 de détection d'un risque de collision de l'aéronef 10 avec le sol.

Le procédé comprend alors une étape 114 d'émission d'un avertissement lorsqu'un risque de collision a été détecté à l'étape 112 de détection. L'avertissement est destiné au pilote de l'aéronef 10 pour que celui-ci puisse corriger la position de l'aéronef 10 et éviter une éventuelle collision avec le sol.

Cette étape est mise en oeuvre à l'aide de l'unité 20 d'avertissement d'un risque de collision.

Le procédé de sécurisation de l'aéronef 10 utilise la vitesse de rapprochement $v_{rapprochement}$ du sol de l'aéronef 10 et, dans certains modes de réalisation la hauteur de l'aéronef 10 par rapport au sol. La vitesse de rapprochement $v_{rapprochement}$ du sol de l'aéronef 10 prend en compte la présence d'obstacle sur le sol.

De ce fait, la procédé de sécurisation de l'aéronef 10 procure une meilleure prise en compte du sol survolé par l'aéronef 10 qu'un procédé basé sur une carte du sol. En effet, le sursol est pris en compte, ce qui signifie que la présence éventuelle d'obstacle fixe ou variable sur le sol est prise en compte dans le procédé de sécurisation de l'aéronef 10.

Le procédé de sécurisation permet une meilleure détection des situations de danger de collision avec le sol.

En outre, le procédé de sécurisation n'implique pas l'utilisation d'un système de localisation de type GPS ou Galileo et d'une carte du sol survolé. Ainsi, le procédé de sécurisation est opérationnel dans toutes les circonstances, y compris dans les situations liées à un emploi militaire de l'aéronef 10.

Le procédé de sécurisation de l'aéronef 10 permet donc une meilleure détection des situations de danger de collision avec le sol, et ce dans toutes les circonstances.

En outre, le dispositif de sécurisation 12 permet d'assurer trois fonctions différentes en un seul équipement : mesure de la hauteur, mesure de la vitesse de rapprochement $v_{rapprochement}$ du sol de l'aéronef 10 et avertissement. Cela évite que l'aéronef 10 soit muni de trois équipements distincts, un pour la mesure de la hauteur, un autre pour la mesure de la vitesse de rapprochement $v_{rapprochement}$ du sol de l'aéronef 10 et encore un autre pour la génération d'un avertissement. Il en résulte un gain en compacité et en coûts.

## Revendications

1. Procédé de sécurisation d'un aéronef (10) survolant un sol, le procédé comprenant les étapes de :

   - acquisition d'une première hauteur (H1) de l'aéronef (10) par rapport au sol à un premier instant,
   - acquisition d'une deuxième hauteur (H2) de l'aéronef (10) par rapport au sol à un deuxième instant,
   - enregistrement de l'intervalle de temps ($\Delta T$) écoulé entre les deux instants d'acquisition de hauteurs (H1, H2),
   - calcul de la vitesse de rapprochement ($v_{rapprochement}$) du sol de l'aéronef (10),
   - comparaison de la vitesse de rapprochement ($v_{rapprochement}$) du sol de l'aéronef (10) avec une valeur de vitesse seuil ($v_{seuil}$), la valeur de vitesse seuil ($v_{seuil}$) dépendant de la deuxième hauteur (H2) acquise,
   - comparaison de la deuxième hauteur (H2) acquise à une pluralité de valeurs seuils de hauteur, chaque valeur de seuil de hauteur étant associée à une valeur de vitesse seuil,
   - fixation de la valeur de vitesse seuil ($v_{seuil}$) à la valeur de vitesse seuil associée à la valeur seuil de hauteur la plus grande de la pluralité de valeurs seuils de hauteur à laquelle la deuxième hauteur (H2) est supérieure
   - détection d'un risque de collision de l'aéronef (10) avec le sol lorsque la vitesse de rapprochement ($v_{rapprochement}$) du sol de l'aéronef (10) est supérieure à la vitesse seuil ($v_{seuil}$),

   l'aéronef (10) comportant un radioaltimètre (12), les étapes d'acquisition étant mises en oeuvre par le radioaltimètre (12).

**2.** Procédé selon la revendication 1, dans lequel la valeur de vitesse seuil ($v_{seuil}$) est fonction du profil de la mission effectuée par l'aéronef (10).

**3.** Procédé selon l'une quelconque des revendications 1 ou 2, dans lequel le procédé comprend une étape d'émission d'un avertissement lorsqu'un risque de collision a été détecté à l'étape de détection.

**4.** Dispositif de sécurisation (12) d'un aéronef survolant un sol, comprenant:

- un moyen d'acquisition d'une première hauteur (H1) de l'aéronef par rapport au sol à un premier instant,
- un moyen d'acquisition d'une deuxième hauteur (H2) de l'aéronef par rapport au sol à un deuxième instant,
- un moyen d'enregistrement de l'intervalle de temps ($\Delta T$) écoulé entre les deux instants d'acquisition des hauteurs (H1, H2),
- un moyen de calcul de la vitesse de rapprochement ($v_{rapprochement}$) du sol de l'aéronef,
- un moyen de comparaison de la vitesse de rapprochement ($v_{rapprochement}$) du sol de l'aéronef avec une valeur de vitesse seuil ($v_{seuil}$), la valeur de vitesse seuil ($v_{seuil}$) dépendant de la deuxième hauteur (H2) acquise,
- un moyen de comparaison de la deuxième hauteur (H2) acquise à une pluralité de valeurs seuils de hauteur, chaque valeur de seuil de hauteur étant associée à une valeur de vitesse seuil,
- un moyen de fixation de la valeur de vitesse seuil ($v_{seuil}$) à la valeur de vitesse seuil associée à la valeur seuil de hauteur la plus grande de la pluralité de valeurs seuils de hauteur à laquelle la deuxième hauteur (H2) est supérieure, et
- un moyen de détection d'un risque de collision de l'aéronef (10) avec le sol lorsque la vitesse de rapprochement ($v_{rapprochement}$) du sol de l'aéronef (10) est supérieure à la vitesse seuil ($v_{seuil}$),

le dispositif de sécurisation (12) étant un radioaltimètre (12).

**5.** Dispositif de sécurisation selon la revendication 4, dans lequel le radioaltimètre (12) comprend :

- un système (16) d'antenne d'émission-réception apte à émettre une onde radioélectrique générée par un générateur (14) d'ondes radioélectriques et à recevoir l'onde radioélectrique réfléchie par le sol, et

- une unité (18) de traitement, les moyens de calcul, de comparaison et de détection faisant partie de l'unité (18) de traitement.

**6.** Dispositif de sécurisation (12) selon la revendication 5, dans lequel le radioaltimètre (12) comprend une unité (20) d'avertissement d'un risque de collision de l'aéronef avec le sol.

**7.** Aéronef (10) comprenant un dispositif de sécurisation (12) selon l'une quelconque des revendications 4 à 6.

**Patentansprüche**

**1.** Verfahren zur Sicherung eines einen Boden überfliegenden Luftfahrzeugs (10), wobei das Verfahren die Schritte umfasst:

- Beschaffen einer ersten Höhe (H1) des Luftfahrzeugs (10) in Bezug auf den Boden zu einem ersten Zeitpunkt,
- Beschaffen einer zweiten Höhe (H2) des Luftfahrzeugs (10) in Bezug auf den Boden zu einem zweiten Zeitpunkt,
- Aufzeichnen des Zeitraums ($\Delta T$), der zwischen den zwei Zeitpunkten des Beschaffens der Höhe (H1, H2) abgelaufen ist,
- Berechnen der Geschwindigkeit ($v_{rapprochement}$) der Bodenannäherung des Luftfahrzeugs (10),
- Vergleichen der Geschwindigkeit ($v_{rapprochement}$) der Bodenannäherung des Luftfahrzeugs (10) mit einem Schwellengeschwindigkeitswert ($v_{seuil}$), wobei der Schwellengeschwindigkeitswert ($v_{seuil}$) von der zweiten beschafften Höhe (H2) abhängt,
- Vergleichen der beschafften zweiten Höhe (H2) mit einer Mehrzahl von Schwellenwerten der Höhe, wobei jeder Schwellenwert der Höhe einem Schwellengeschwindigkeitswert zugeordnet ist,
- Festlegen des Schwellengeschwindigkeitswerts ($v_{seuil}$) an den Schwellengeschwindigkeitswert, der dem größten Schwellenwert der Höhe der Mehrzahl von Schwellenwerten der Höhe zugeordnet ist, zu dem die zweite Höhe (H2) größer ist,
- Detektieren eines Kollisionsrisikos des Luftfahrzeugs (10) mit dem Boden, wenn die Geschwindigkeit ($v_{rapprochement}$) der Bodenannäherung des Luftfahrzeugs (10) größer ist als die Schwellengeschwindigkeit ($v_{seuil}$),

wobei das Luftfahrzeug (10) einen Funkhöhenmesser (12) aufweist, und die Beschaffungsschritte von dem Funkhöhenmesser (12) durchgeführt werden.

**2.** Verfahren nach Anspruch 1, bei dem der Schwellen-geschwindigkeitswert ($v_{seuil}$) abhängig von dem Profil des vom Luftfahrzeug (10) durchgeführten Einsatzes ist.

**3.** Verfahren nach einem beliebigen der Ansprüche 1 oder 2, bei dem das Verfahren einen Schritt der Ausgabe einer Warnung umfasst, wenn das Kollisionsrisiko bei dem Detektionsschritt detektiert wurde.

**4.** Vorrichtung (12) zur Sicherung eines einen Boden überfliegenden Luftfahrzeugs, umfassend:

- ein Mittel zum Beschaffen einer ersten Höhe (H1) des Luftfahrzeugs in Bezug auf den Boden zu einem ersten Zeitpunkt,
- ein Mittel zum Beschaffen einer zweiten Höhe (H2) des Luftfahrzeugs in Bezug auf den Boden zu einem zweiten Zeitpunkt,
- ein Mittel zum Aufzeichnen des Zeitraums ($\Delta T$), der zwischen den zwei Zeitpunkten des Beschaffens der Höhen (H1, H2) abgelaufen ist,
- ein Mittel zum Berechnen der Geschwindigkeit ($v_{rapprochement}$) der Bodenannäherung des Luftfahrzeugs,
- ein Mittel zum Vergleichen der Geschwindigkeit ($v_{rapprochement}$) der Bodenannäherung des Luftfahrzeugs mit einem Schwellengeschwindigkeitswert ($v_{seuil}$), wobei der Schwellengeschwindigkeitswert ($v_{seuil}$) von der beschafften zweiten Höhe (H2) abhängt,
- ein Mittel zum Vergleichen der beschafften zweiten Höhe (H2) mit einer Mehrzahl von Schwellenwerten der Höhe, wobei jeder Schwellenwert der Höhe einem Schwellengeschwindigkeitswert zugeordnet ist,
- ein Mittel zum Festlegen des Schwellengeschwindigkeitswerts ($v_{seuil}$) an den Schwellengeschwindigkeitswert, der dem größten Schwellenwert der Höhe der Mehrzahl von Schwellenwerten der Höhe zugeordnet ist, zu dem die zweite Höhe (H2) größer ist, und
- ein Mittel zum Detektieren eines Kollisionsrisikos des Luftfahrzeugs (10) mit dem Boden, wenn die Geschwindigkeit ($v_{rapprochement}$) der Bodenannäherung des Luftfahrzeugs (10) größer als die Schwellengeschwindigkeit ($v_{seuil}$) ist,

wobei die Sicherungsvorrichtung (12) ein Funkhöhenmesser (12) ist.

**5.** Vorrichtung zur Sicherung nach Anspruch 4, bei dem der Funkhöhenmesser (12) umfasst:

- ein Sende-Empfangs-Antennensystem (16), das geeignet ist, eine Funkwelle, die von einem Funkwellengenerator (14) erzeugt wird, zu senden und eine von dem Boden reflektierte Funkwelle zu empfangen, und
- eine Auswerteeinheit (18), wobei das Berechnungsmittel, das Vergleichsmittel und das Detektionsmittel Teil der Auswerteeinheit (18) sind.

**6.** Vorrichtung (12) zur Sicherung nach Anspruch 5, bei dem der Funkhöhenmesser (12) eine Einheit (20) zum Warnen eines Kollisionsrisikos des Luftfahrzeugs mit dem Boden umfasst.

**7.** Luftfahrzeug (10), eine Sicherungsvorrichtung (12) nach einem beliebigen der Ansprüche 4 bis 6 umfassend.

**Claims**

**1.** A method for securing an aircraft (10) flying over a ground, the method comprising the following steps:

- acquiring a first height (H1) of the aircraft (10) relative to the ground at a first moment,
- acquiring a second height (H2) of the aircraft (10) relative to the ground at a second moment,
- recording the time interval ($\Delta T$) elapsed between the two height (H1, H2) acquisition moments,
- calculating the closure rate ($v_{rapprochement}$) of the aircraft (10) to the ground,
- comparing the closure rate ($v_{rapprochement}$) of the aircraft (10) to the ground with a rate threshold value ($v_{seuil}$), the rate threshold value ($v_{seuil}$) depending on the second acquired height (H2),
- comparing the second acquired height (H2) to multiple height threshold values, each height threshold value being associated with a rate threshold value,
- setting the rate threshold value ($v_{seuil}$) at the rate threshold value associated with the largest height threshold value of the multiple height threshold values to which the second height (H2) is superior,
- detecting a risk of collision of the aircraft (10) with the ground when the closure rate ($v_{rapprochement}$) of the aircraft (10) to the ground is greater than the rate threshold ($v_{seuil}$),

the aircraft (10) including a radioaltimeter (12), the steps of acquiring being carried out by the radioaltimeter (12).

**2.** The method according to claim 1, wherein the rate threshold value ($v_{seuil}$) depends on the profile of the mission performed by the aircraft (10).

**3.** The method according to any one of claims 1 or 2, wherein the method comprises a step of sending a warning when a collision risk has been detected during the step of detecting.

4. A device (12) for securing an aircraft flying over a ground, comprising:

- means for acquiring a first height (H1) of the aircraft relative to the ground at a first moment,
- means for acquiring a second height (H2) of the aircraft relative to the ground at a second moment,
- means for recording the time interval ($\Delta T$) elapsed between the two height (H1, H2) acquisition moments,
- means for calculating the speed of approach ($v_{rapprochement}$) of the aircraft to the ground,
- means for comparing the speed of approach ($v_{rapprochement}$) of the aircraft to the ground with a rate threshold value ($v_{seuil}$), the rate threshold value ($v_{seuil}$) depending on the second acquired height (H2),
- means for comparing the second acquired height (H2) to multiple height threshold values, each height threshold value being associated with a rate threshold value,
- means for setting the rate threshold value ($v_{seuil}$) at the rate threshold value associated with the largest height threshold value of the multiple height threshold values to which the second height (H2) is superior,
- means for detecting a risk of collision of the aircraft (10) with the ground when the speed of approach ($v_{rapprochement}$) of the aircraft (10) to the ground is greater than the rate threshold ($v_{seuil}$), the securing device being a radioaltimeter (12).

5. The securing device according to claim 4, wherein the radioaltimeter (12) comprises:

- an antenna system (16) for emitting/receiving capable of emitting a radio wave generated by a radio wave generator (14) and receiving the radio wave reflected by the ground, and
- a processing unit (18), the means for calculating, comparing and detecting means being part of the processing unit (18).

6. The securing device (12) according to claim 5, wherein the radioaltimeter (12) comprises a unit (20) providing a warning when there is a risk of collision of the aircraft with the ground.

7. An aircraft (10) comprising a securing device (12) according to any one of claims 4 to 6.

FIG.1

FIG.2

**EP 2 743 186 B1**

**RÉFÉRENCES CITÉES DANS LA DESCRIPTION**

**Documents brevets cités dans la description**

- WO 0190694 A